# EUROPEAN PATENT APPLICATION

(11) **EP 1 847 448 A2**
(43) Date of publication of application: **24.10.2007**
(21) Application number: 07106462.0
(22) Date of filing: 18.04.2007
(51) Int. Cl.: B62D 53/06

(54) **Variable length trailer for tyred tractor units**

(30) Priority: 18.04.2006 IT TO20060287
(71) Applicant: Industrie Cometto S.P.A., 12011 Borgo San Dalmazzo (IT)
(72) Inventor: Ghinamo, Paolo, 12012 Boves (IT)
(74) Representative: Jorio, Paolo

(57) **Abstract**

A variable length trailer (3) has an attachment portion (5) to a tractor unit (2), a supporting chassis (7) on wheels, and a guide and slide adjustment device (13) arranged between the attachment portion and the supporting frame to vary the length of the trailer (3); the adjustment device comprising a guide (14) carried by the supporting chassis and provided with a first transverse through opening (16), an elongated slide member (15) connected to the attachment portion and having a row of second through openings (18) adapted to be arranged at the first opening, and at least one axial constraining pin (20) adapted to be inserted in the mentioned openings; the adjustment device further having a sensor (23) for detecting a correspondence condition between each of the second openings (18) and the first opening (16) during the sliding of the slide member and an emitter (25,26) to emit an opening correspondence signal in reply to the correspondence condition detection.

## Description

The present invention relates to a variable length trailer for tyred tractor units.

In the field of haulage by means of tyred vehicle, it is known the use of variable length or telescopic trailers towed by a tractor unit and comprising an adjustable chassis, in turn comprising a front portion for attachment to the tractor unit and a rear chassis, reciprocally coupled in axially adjustable manner to adapt the trailer to the length of the load to be hauled. The front portion carries a fifth wheel coupling member adapted to be connected to a corresponding fifth wheel coupling member of the tractor unit, while the rear chassis carries a plurality of tyred axles, which are fifth-wheel steering and are, normally, reciprocally connected by a rigid mechanical tie-rod/push-rod transmission system actuated by a pair of steering actuators controlled according to the relative rotation of the two mentioned fifth wheel coupling members.

Generally, the front portion carries an elongated slide member, which is provided with a row of transverse through openings and is axially sliding in a guiding portion of the rear chassis. The guiding portion is crossed by an opening adapted to be selectively placed at one of the openings of the elongated slide member openings and supports a hydraulic actuator, whose outlet rod ends with a pin adapted to be inserted through the guiding portion opening and to enter inside the openings arranged one at the other to lock the chassis in a plurality of relative axial positions each corresponding to a certain length of the trailer.

The preparation or setting of the trailer according to the load to be hauled is performed in the following manner. Known the length and features of the load to be hauled, there are selected the length of the trailer and which of the slide member openings is to be engaged by the pin. At this point, the front portion and the rear chassis are displaced one with respect to the other, normally by locking the axial wheels and moving the tractor unit, to make the selected or identified opening correspond to the slide opening; at this point, the pin is inserted in the corresponding openings.

Instead, the mechanical transmission and the steering actuator control modes are not changed when the length of the trailer is varied.

The adaptation of trailers of the above-described type to the load to be hauled requires extremely long times, and the absolute need for the tractor unit driver and at least one expert person on the ground to provide continuous instructions to the tractor unit driver. In most cases, a relatively long time elapses before the openings are arranged one at the other and, however, the insertion of the pin member in the opening themselves is not always immediate or free from jamming or relative slipping.

Furthermore, the fact that the axles are angularly connected together by means of a rigid connection despite being arranged at different distances from the fifth wheel coupling of the tractor unit implies that in some steering situations part of the wheels trail on the asphalt getting worn in a different manner from the other wheels and compromising the reliability of the trailer. The stresses transmitted to the transmission following the trailing of the wheels, then, subject the transmission itself to high stresses, compromising the efficiency and the reliability of the entire motion transmission kinematic chain and making the vehicle difficult to handle, particularly during steering operations.

It is the object of the present invention to make a variable length trailer, whose construction features allow to simply and cost-effectively solve the above-mentioned problems, and specifically allow a very fast, optimal adjustment or setting of the trailer without the intervention of specialised personnel, and an easy use of the trailer in any functional condition.

According to the present invention it is made a variable length trailer for tyred tractor units comprising an attachment portion to a tractor unit, a supporting chassis onto which a plurality of tyred axles are connected, and guide and slide axial adjustment means arranged between the attachment portion and said supporting chassis to vary the length of the trailer; said adjustment means comprising a guide carried by said supporting chassis and provided with a transverse through opening, an elongated slide member connected to said attachment portion and comprising a row of retaining seats adapted to be arranged at said opening, and at least one axial constraining pin adapted to be inserted in said opening and selectively in said retaining seats; characterised in that said adjustment means further comprise sensor means for detecting a correspondence condition between each of said retaining seats and said opening during the sliding of said sliding member in said guide and emitter means to emit an opening/seat correspondence signal in reply to the detection of said correspondence condition.

The invention will now be described with reference to the accompanying figures which illustrate a non-limitative embodiment thereof, in which:
- figure 1 and 2 show an elevation side view of a preferred embodiment of the trailer according to the present invention, coupled to a tyred tractor unit and arranged in two different functional configurations;
- Figure 3 is a magnified scale, plan view of the trailer in figure 2;
- Figure 4 show a magnified scale, plan view of a rear portion of the trailer in figure 3;
- Figure 5 is a figure similar to figure 4 and shows a variant of a detail in figure 4; and
- Figure 6 is a figure similar to figure 3 and shows a variant of a detail in figure 3.

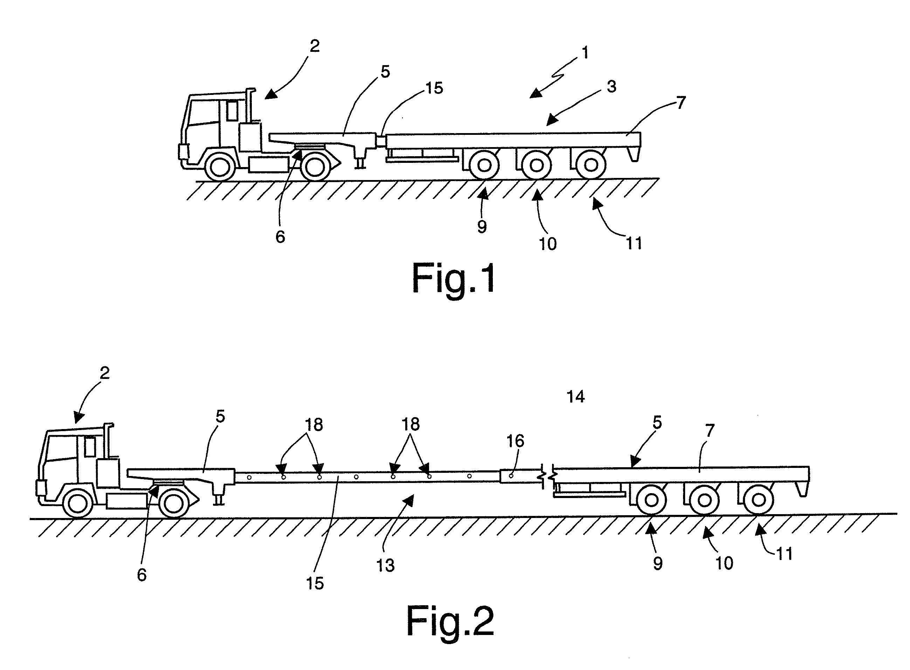

In figures 1 and 2, numeral 1 indicates as a whole a haulage vehicle, e.g. of prefabricated trusses, comprising a tyred tractor unit 2 and a variable length trailer 3.

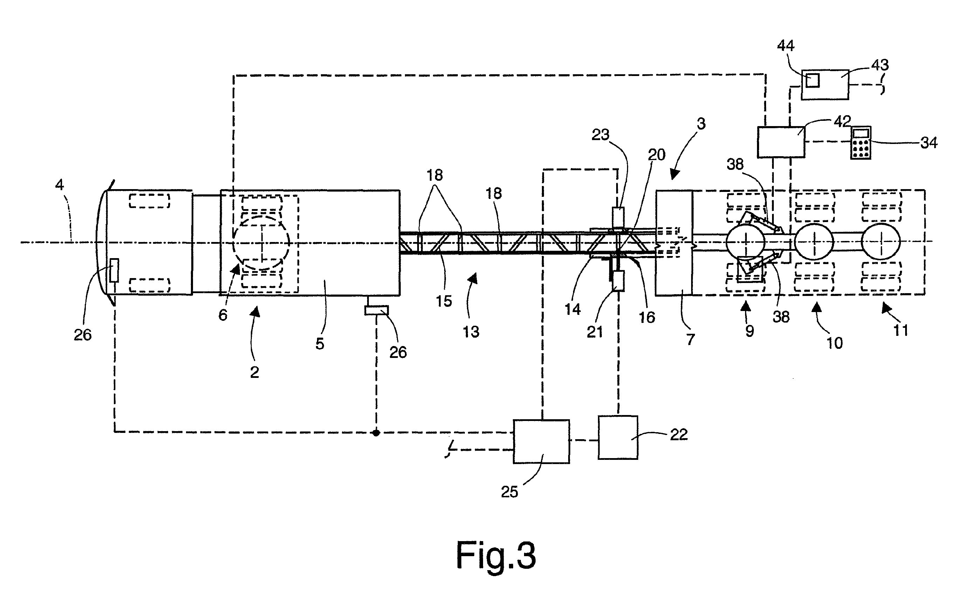

Trailer 3 has a longitudinal axis 4 (figure 3) and comprises a front attachment portion 5, intrinsically known, connected to tractor unit 2 by means of an essentially vertical axis fifth wheel coupling 6, and a rear supporting chassis 7, to which, in the specific case herein described, three tyred axles indicated by numerals 9, 10 and 11, each rotating about a corresponding hinge axis A, are connected, by means of corresponding fifth wheel couplings 8.

Front portion 5 and rear chassis 7 are reciprocally connected by means of an axial guide and slide adjustment device 13 adapted to allow the corresponding relative movement between front portion 5 and rear chassis 7 to vary the length of trailer 3.

With reference to figures 2 and 3, adjustment device 13 comprises a guide 14 parallel to axis 4 carried by chassis 7, and an elongated central structure or beam 15 integrally connected to portion 5 in position parallel to axis 4 and slidingly coupled to guide 14 to be displaced between an inserted position (figure 1) corresponding to a minimum length of trailer 3, and an extracted position corresponding to maximum length of trailer 3 itself.

Again with reference to figure 2 and, specifically, to figure 3, guide 14 is provided with a reference through opening 16, which extends orthogonally to longitudinal axis 4 and is delimited by two supporting side surfaces, while central beam 15 is provided with a row of through openings 18 distributed along beam 15 itself. According to a variant (not shown), beam 15 alternatively comprises through openings and for each of the through openings, a cavity or blank retaining seat adapted to perform the same function as the corresponding opening 18. Each opening 18 extends parallelly to opening 16 of guide 14 and, when arranged at opening 16 itself, trailer 3 has a certain known length. Device 13 further comprises a locking pin 20 which when two openings 16,18 are arranged at each other, crosses the openings themselves and locks chassis 7 and attachment portion 5 in a certain fixed axial position by cooperating with the surface delimiting the openings themselves. Pin 20 forms the extension of the outlet rod of a linear hydraulic actuator 21 controlled by a hydraulic control unit 22 for moving pin 20 between an advanced constraining position and a retracted release position.

Again with reference to figure 3, device 13 further comprises a sensor 23, conveniently of the optical type or of the feeler type, which is carried by chassis 7, and is arranged near the guide to either directly or indirectly detect a correspondence condition between opening 16 and one of openings 18 and to emit a correspondence detection signal to a control unit 25, also forming part of device 13. In reply to such detection signal, unit 25 activates a light or acoustic source 26 arranged outside the vehicle and/or in the driving cab of the tractor unit.

The setting of trailer 3 according to the length of the load to be hauled is performed in the following manner. Attachment portion 5 and chassis 7 are initially arranged in a relative position close to a position corresponding to the required length. At this point, maintaining for example the wheels of axles 9-11 locked, sensor 23 is activated and tractor unit 2 is moved. During such movement, beam 15 slides in guide 14 and openings 18 are moved with respect to opening 16; when one of the openings 18 approaches opening 16, the correspondence condition is detected by sensor 23. In reply to the signal received from sensor 23, the unit 25 activates emitters 26. Tractor unit 2 is stopped and by means of hydraulic control unit 22 the operator activates actuator 21 which moves pin 20 engaging openings 16,18 and axially locking chassis 7 to attachment portion 5. It is apparent that the described implementation solution allows the vehicle driver him or herself to autonomously adjust the length of the trailer directly from inside the tractor unit cab, without the need for external assistance.

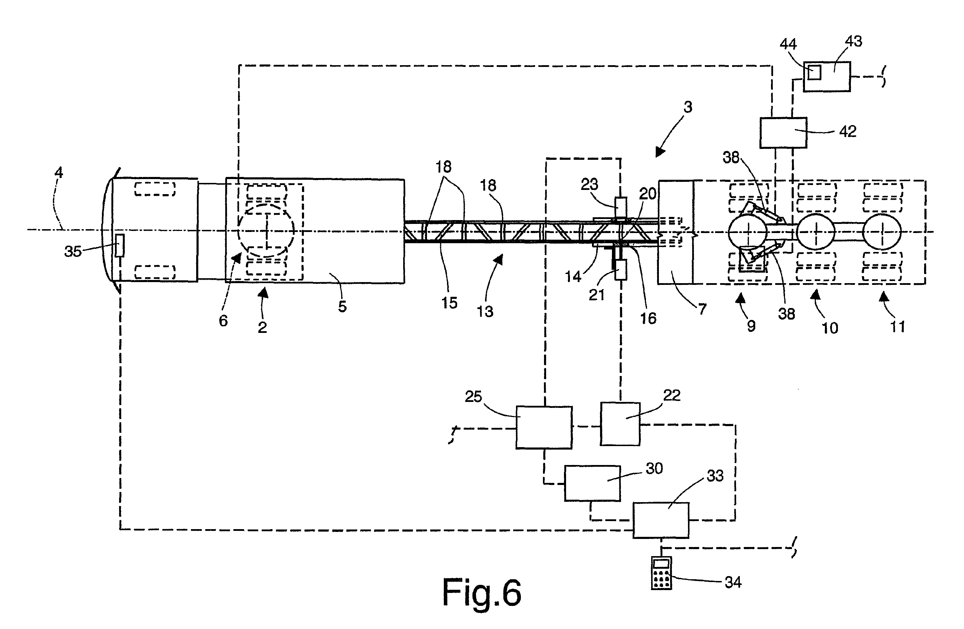

According to the variant shown in figure 6, in addition to sensor 23 and to unit 25, device 13 further comprises a signal processing assembly 30, which, given a reference or starting position of portion 5 and chassis 7, e.g. the inserted position shown in figure 1, the distribution of openings 18 and the number of signals received by sensor 23, is adapted to associate a corresponding detected length of trailer 3 to each opening correspondence signal, e.g. by counting the intercepted openings 18, and to emit a signal towards a comparer block 33 in reply. Comparer block 33 compares the detected length with the required length of the trailer entered by the operator responsible of the adjustment by means of a keypad 34. In the coinciding conditions of the mentioned lengths, block 33 outputs a required length reached signal and activates a light or acoustic emitter member 35 or any other indicating element. Parallelly to the emission of the mentioned required length reached signal, comparer block 33 outputs an activation signal of cylinder 21, which moves pin 20 within corresponding openings 16,18, to hydraulic control unit 22. In this manner, described device 13 automatically sets the required trailer length without the intervention of operators.

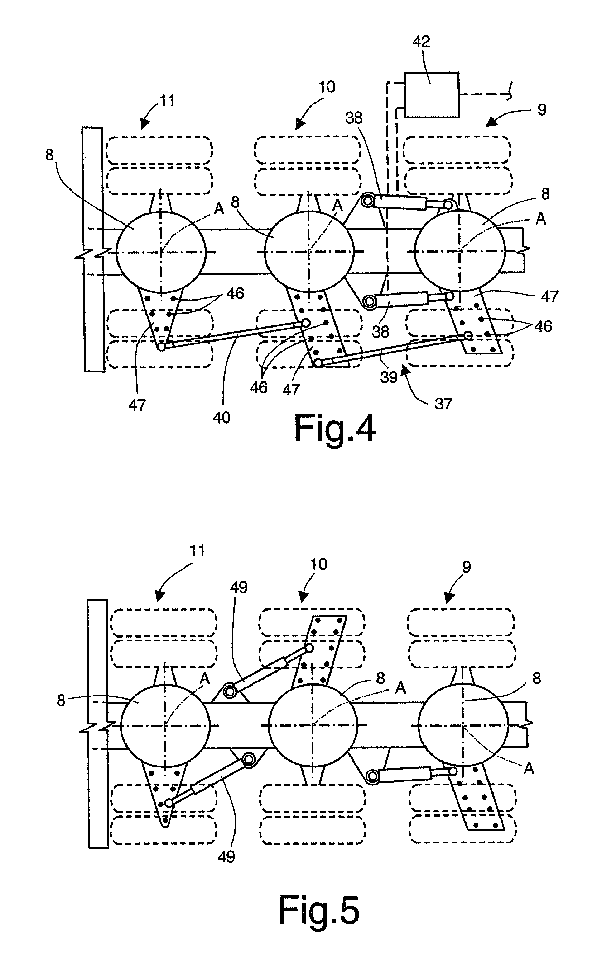

With reference to figure 4, axles 9, 10 and 11 are turnable about corresponding axes A under the bias of a steering assembly 37 comprising a pair of linear actuators 38 arranged between chassis 7 and axle 9 and a pair of push-rods/tie-rods 39 and 40 arranged between axles 9 and 10 and between axles 10 and 11, respectively. Actuators 38 are controlled by a control unit 42 according to the rotation angle of fifth wheel coupling 6 arranged between tractor unit 2 and trailer 3 and on the basis of an intrinsically known reference law of motion. According to the invention, unit 42 receives the set trailer length value again from keypad 34 or comparer block 33, and is connected to an adjustment unit 43 adapted to vary the mentioned reference law of motion according to the set length of trailer 3, as explained in greater detail below.

Again according to the invention, adjustment block 43 further comprises an indicator block 44, consisting of, for example, a display for indicating an optimal attachment point of push-rod/tie-rods 39,40, for each length of trailer 3 and for both push-rod/tie-rods 39,40 themselves, with respect to the corresponding axles selected by adjustment unit 43 from a plurality of predetermined attachment points 46 stored in a memory block of unit 43 itself and physically consisting of holes obtained on plates 47 integrally connected to each of axles 9-11.

During the setting of the trailer, as soon as the length adjustment is completed, unit 43 modifies the aforesaid reference law of motion according to the trailer length so as to make the trailing of the wheels of axles 9-11 acceptable during rotation of fifth wheel coupling 6, i.e. during vehicle steering.

According to the invention, in order to further improve vehicle handling, parallelly to modifying the reference law of motion, unit 43 shows the optimal hinging point of tie-rods/push-rods 39 and 40 on the display. On the basis of such information, an operator may vary the original hinging simply by following the map or the indications visualised on the display, varying in such a manner the angular constraint between axles 9-11 according to the trailer length.

According to the variant shown in figure 5, instead of tie-rods/push-rods 39 ad 40 and for both axles 10 and 11, the steering device comprises a corresponding linear actuator dedicated to the corresponding axles, indicated by numeral 49. Each actuator 49 is controlled by unit 43, which modifies the reference law of motion according to the distance of the single axle from fifth wheel coupling 6, as for actuators 38. In this manner, each axle 9-11 is controlled independently from the other axles, thus drastically reducing and even eliminating trailing between wheels and asphalt and further improving the vehicle handling.

The same result described above is obtained by a further variant (not shown) according to which push-rod/tie-rods 39 and 30 are replaced by actuators 49.

From the above it is apparent that the use of a sensor detecting the position of chassis 7 which respect to attachment portion 5 allows, on one hand, to set the required length of trailer 3 very quickly and with absolute certainty without the need for specialised personnel and, on the other hand, to considerably improve vehicle handling, regardless of the conditions in which the vehicle itself is called to operated. Regarding this latter aspect, it is indeed apparent that the rotation of the axles, unlike the known solutions, is controlled by taking into consideration the length of trailer 3 and the relative position of axles 9-11 themselves with respect to fifth wheel coupling 6.

From the above it is apparent that changes and variations my be made to the described trailer 3 without because of this departing from the scope of protection defined by the claims. Specifically, the attachment portion, and specially chassis 7 and device 13, may be made in different manner from that shown by way of example.

## Claims

1. A variable length trailer (3) for tyred tractor units comprising an attachment portion (5) to a tractor unit (2), a supporting chassis (7) onto which a plurality of tyred axles (9;10;11) are connected, and guide and slide axial adjustment means arranged between the attachment portion and said supporting chassis to vary the length of the trailer (3); said adjustment means comprising a guide (14) carried by said supporting chassis and provided with a reference transverse through opening (16), an elongated slide member (15) connected to said attachment portion and comprising a row of retaining seats (18) adapted to be arranged at said opening, and at least one axial constraining pin (20) adapted to be inserted in said opening (16) and selectively in said retaining seats (18); **characterised in that** said adjustment means further comprise sensor means (23) for detecting a correspondence condition between each of said retaining seats (18) and said opening (16) during the sliding of said sliding member in said guide and emitter means (25,26) to emit an opening/seat correspondence signal in reply to the detection of said correspondence condition.

2. A trailer according to claim 1, **characterised in that** said sensor means are optical sensor means.

3. A trailer according to claim 1, **characterised in that** said sensor means comprise feeler sensor means.

4. A trailer according to one of the preceding claims, **characterised in that** said emitter means (26) are carried by said tractor unit.

5. A trailer according to any one of the preceding claims, **characterised by** further comprising processing means (30) for associating a corresponding detected length of trailer (3) to each said opening/seat correspondence signal, comparer means (33) for comparing said detected length with the required length of the trailer set by the operator and further emitter means (35) for emitting a required dimension reached signal when said detected length coincides with said required length.

6. A trailer according to claim 5, **characterised by** comprising control means (22,33) for activating a hydraulic advancement actuator (21) of said pin (20) in presence of said required dimension reached signal.

7. A trailer according to claim 5 or 6, **characterised by** comprising, for each said axle (9),(10),(11), a corresponding fifth wheel coupling (8) adapted to allow the corresponding said axle to turn with respect to the supporting chassis (7) about a corresponding hinging axis (A), and at least one hydraulic linear steering actuator (38) of said axles; further adjustment means (43) being provided to vary a reference law of motion of said hydraulic linear steering actuator according to the variation of said required length.

8. A trailer according to claim 7, **characterised by** comprising for each of said axle, a corresponding linear actuator (38;49) controlled by said adjustment means (43) independently from the other said linear actuator means.

9. A trailer according to claim 7, **characterised in that** a first (9) of said axles is actuated one said linear actuator (38) and the other axles are angularly constrained to the said first axle by means of corresponding tie-rods/push-rods (39;40); indicator means (43,44) being provided for indicating an ideal attachment point selected from a plurality of predetermined, stored attachment points for each said required length and for each said tie-rod/push-rod.
